## Europäisches Patentamt

## European Patent Office

## Office européen des brevets

(11) Veröffentlichungsnummer: **0 499 082 A1**

# EUROPÄISCHE PATENTANMELDUNG

(21) Anmeldenummer: **92101327.2**

(22) Anmeldetag: **28.01.92**

(51) Int. Cl.⁵: **B60B 33/02**

(30) Priorität: **13.02.91 DE 4104280**

(43) Veröffentlichungstag der Anmeldung:
**19.08.92 Patentblatt 92/34**

(84) Benannte Vertragsstaaten:
**DK FR GB IT SE**

(71) Anmelder: **Karweg, Reinhold**
**Im Winkel 14**
**W-3530 Warburg 2 Scherfede(DE)**

(72) Erfinder: **Karweg, Reinhold**
**Im Winkel 14**
**W-3530 Warburg 2 Scherfede(DE)**

(74) Vertreter: **Walther, Horst, Dipl.-Ing.**
**Wilhelmshöher Allee 275 Postfach 41 01 08**
**W-3500 Kassel(DE)**

(54) **Laufrolle mit Feststeller, insbesondere für Möbel.**

(57) Laufrolle, insbesondere für Möbel, bestehend aus einem Lagergestell und einem Feststeller für die Rolle, wobei das Lagergestell (1) und der Feststeller (5) ein einheitliches Teil bilden.

Rank Xerox (UK) Business Services

Die Erfindung betrifft eine Laufrolle, insbesondere für Möbel, bestehend aus einem Lagergestell und einem Feststeller für die Rolle.

Laufrollen dieser Art sind bekannt.

Bei den bekannten Laufrollen stellt der Feststeller einen gesonderten Teil dar, der mittels eines am Lager angeordneten Führungsgliedes in seine Bremsstellung geführt wird.

Durch die Ausbildung des Feststellers als gesonderter Teil an der Laufrolle ist die Herstellung relativ aufwendig und erfordert auch einen erhöhten Montageaufwand.

Der Erfindung liegt daher die Aufgabe zugrunde, eine Laufrolle, insbesondere für Möbel zu schaffen, die mit weniger Bauaufwand hergestellt werden kann und bei der insbesondere weniger Montagearbeiten erforderlich sind. Das wird erfindungsgemäß dadurch erreicht, daß das Lagergestell und der Feststeller einen einheitlichen Teil bilden.

Im einzelnen ist die Ausbildung dabei so getroffen, daß der Feststeller federnd nachgiebig am Lagergestell angebracht ist. Gemäß einer speziellen Ausführungsform ist der Feststeller an einem frei federnden Arm angebracht, der mit dem Lagergestell ein einheitliches Stück bildet.

Weiterhin weist das Lagergestell einen Abdeckbügel über den Rollen auf, an dessen Innenseite ein Betätigungsglied für den Feststeller angebracht ist.

Damit das Betätigungsglied für den Feststeller seine Funktion ausführen kann, ist der Abdeckbügel beweglich am Lagergestell angebracht.

Die Beweglichkeit wird dabei dadurch erzielt, daß der Abdeckbügel mit dem Lagergestell durch einen Zapfen von relativ geringem Querschnitt verbunden ist, so daß die natürliche Nachgiebigkeit des Zapfens für die Beweglichkeit ausreicht.

Nach einem weiteren Merkmal der Erfindung sind am Abdeckbügel und am Lagergestell Verriegelungsmittel angebracht, damit die Endlage des Feststellers fixiert werden kann.

Weiterhin weist der Abdeckbügel Bogenform auf, die der Rollenform angepaßt ist, wobei der Abdeckbügel auch eine Betätigungslasche besitzt, die es ermöglicht, den Abdeckbügel so weit zu bewegen, daß das Betätigungsglied für den Feststeller wirksam wird.

Weiterhin ist nach einem weiteren Merkmal der Erfindung zwischen dem Lagergestell und dem Abdeckbügel ein Begrenzer angebracht. Dadurch wird erreicht, daß die Beweglichkeit des Abdeckbügels begrenzt ist und somit verhindert wird, daß bei unsachgemäßer Behandlung des Abdeckbügels ein Abreißen des Abdeckbügels vermieden ist. Der Begrenzer ist im einfachsten Fall ein dünnes Bändchen oder ein Seil aus Kunststoff.

In der Zeichnung ist eine beispielsweise Ausführungsform dargestellt.

Fig. 1     zeigt das Lagergestell für die Laufrolle;

Fig. 2     zeigt das Lagergestell zusammen mit dem Feststeller in Bremsstellung;

Fig. 3     zeigt eine Untersicht in Richtung des Pfeiles II in Fig. 1, wobei die Laufrollen und die Rollenachse getrennt gezeichnet ist;

Fig. 4     zeigt die Innenseite der Laufrolle.

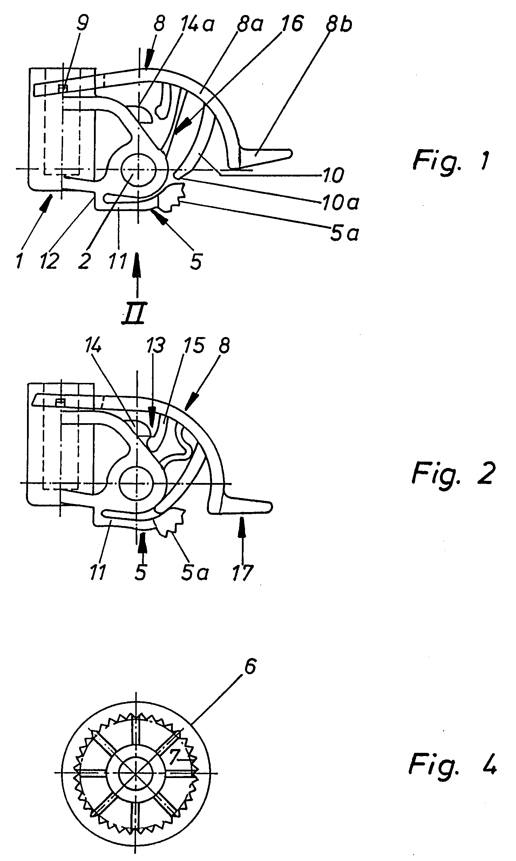

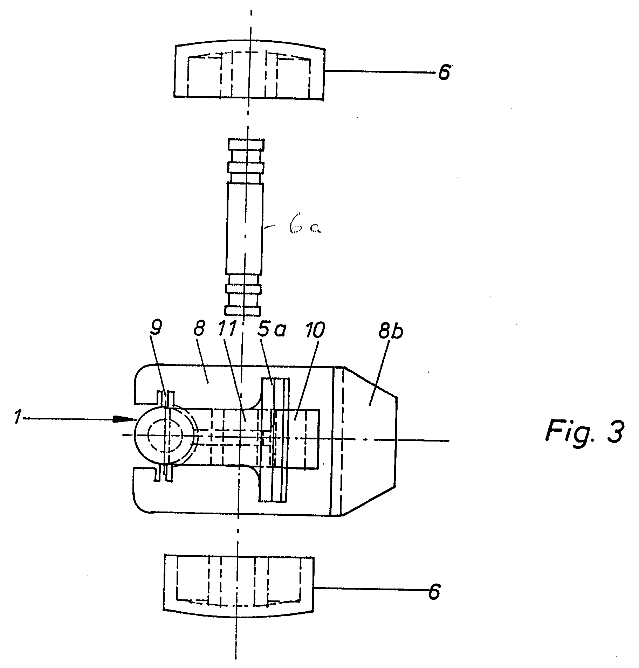

Wie insbesondere die Fig. 1 zeigt, ist insgesamt mit 1 das Lagergestell für die Laufrolle bezeichnet. Durch die Lagerbohrung 2 wird die Achse 6a für die Laufrollen 6 gesteckt, die der Deutlichkeit wegen im Abstand von dem Lagergestell in Fig. 3 gezeichnet sind.

Wie Fig. 1 und 2 zeigen, besitzt das Lagergestell 1 den Feststeller 5, der mit dem Lagergestell einen einheitlichen Teil bildet. Der Endbereich des Feststellers ist gezackt 5a ausgebildet, damit eine kraftschlüssige Verbindung mit der an der Innenseite der Rolle 6 angebrachten Verzahnung 7 stattfinden kann (vergl. auch Fig. 2 und 4).

Am Lagergestell 1 ist beweglich der Abdeckbügel 8 angeordnet. Dieser Abdeckbügel besitzt Bogenform 8a, die der Rollenform etwa angepaßt ist. Am Ende des Abdeckbügels ist eine Betätigungslasche 8b vorgesehen.

Die Beweglichkeit des Abdeckbügels wird mit Hilfe eines Zapfens 9 erreicht, der relativ geringen Querschnitt hat, so daß die innere Elastizität des Zapfens für die Beweglichkeit ausreicht.

Darüber hinaus besitzt der Abdeckbügel an seiner Innenseite ein Betätigungsglied 10, das in Form eines Fingers ausgebildet ist. Das Ende 10a dieses Betätigungsgliedes liegt in der Freilaufstellung der Rolle 6 kurz vor dem Feststeller 5.

Der Feststeller selbst ist als frei federnden Arm 11 angebildet, der mit dem Lagergestell 1 ein einheitliches Teil bei 12 bildet.

Auf diese Weise ist erreicht, daß das Lagergestell zusammen mit dem Feststeller aus einem Gußteil hergestellt werden kann, so daß die sonst erforderliche gesonderte Montage des Feststellers vermieden ist.

Aus der Fig. 2 ist ersichtlich, daß bei Betätigung des Abdeckbügels 8, der das Betätigungsglied 10 aufweist, der Feststeller 5 seine Endlage einnimmt, in der der verzahnte Endbereich 5a in Eingriff mit den Zähen 7 der Rolle 6 kommt.

Damit diese Lage fixiert ist, sind sowohl am Abdeckbügel 8, als auch am Lagergestell 1 Verriegelungsmittel, die insgesamt mit 13 bezeichnet sind angebracht. Diese Verriegelungsmittel bestehen im einzelnen aus einem Rückhalter 14 und einem biegsamen oder nachgiebig ausgebildeten Rastarm 15, der mit dem Rückhalter 14 in Eingriff kommt, wenn das Betätigungsglied 10 wirksam ist.

Der Rückhalter 14 besitzt dabei eine Gleitfläche 14a, an der der Rastarm 15 vor dem Einklinken entlang läuft und dabei eine gewisse federnde Seitbewegung ausführt und danach unter den Rückhalter einrastet.

Es handelt sich bei den Verriegelungsmitteln um eine Art Schnappverbindung, die wieder lösbar ist.

Ferner ist zwischen dem Abdeckbügel 8 und dem Lagergestell ein Begrenzer 16 angeordent, der im wesentlichen ein dünnes Bändchen ist. Dieser Begrenzer hat die Aufgabe, die Beweglichkeit des Abdeckbügels zu begrenzen, wenn die Entriegelung gewünscht wird. In diesem Falle muß nämlich an der Betätigungslasche 8b eine Kraft in Richtung des Pfeiles 17 wirken. Bei unsachgemäßer Behandlung könnte dabei erreicht werden, daß der Zapfen 9 abbricht. Damit dies nicht geschieht, ist die Beweglichkeit des Abdeckbügels durch diesen Begrenzer 16 begrenzt.

**Patentansprüche**

1. Laufrolle, insbesondere für Möbel, bestehend aus einem Lagergestell und einem Feststeller für die Rolle
   **dadurch gekennzeichnet,** daß
   das Lagergestell (1) und der Feststeller (5) ein einheitliches Teil bilden.

2. Laufrolle nach Anspruch 1
   **dadurch gekennzeichnet,** daß
   der Feststeller (5) federnd nachgiebig am Lagergestell (1) angebracht ist.

3. Laufrolle nach Anspruch 2
   **dadurch gekennzeichnet,** daß
   der Feststeller an einem frei federnden Arm (11) angebracht ist, der mit dem Lagergestell (1) ein einheitliches Stück bildet.

4. Laufrolle nach Anspruch 1
   **dadurch gekennzeichnet,** daß
   das Lagergestell (1) einen Abdeckbügel (8) aufweist, an dessen Innenseite ein Betätigungsglied (10) für den Feststeller (5) angebracht ist.

5. Laufrolle nach Anspruch 4
   **dadurch gekennzeichnet,** daß
   der Abdeckbügel (8) beweglich am Lagergestell (1) angebracht ist.

6. Laufrolle nach Anspruch 5
   **dadurch gekennzeichnet,** daß
   der Abdeckbügel (8) mit Hilfe eines in sich beweglichen Zapfens (9) am Lagergestell (1) angebracht ist.

7. Laufrolle nach Anspruch 4
   **dadurch gekennzeichnet,** daß
   am Abdeckbügel (8) und am Lagergestell (1) Verriegelungsmittel (13) für die Endlage des Feststellers (5) angebracht sind.

8. Laufrolle nach Anspruch 7
   **dadurch gekennzeichnet,** daß
   die Verriegelungsmittel aus einem Rückhalter (14) und einem federnden Rastarm (15) bestehen.

9. Laufrolle nach Anspruch 4
   **dadurch gekennzeichnet,** daß
   der Abdeckbügel (8) Bogenform aufweist, die der Rollenform angepaßt ist und daß der Abdeckbügel eine Betätigungslasche (8b) aufweist.

10. Laufrolle nach Anspruch 1
    **dadurch gekennzeichnet,** daß
    zwischen dem Lagergestell (1) und dem Abdeckbügel (8) ein Begrenzer (16) angebracht ist, der die Bewegung des Abdeckbügels begrenzt.

11. Laufrolle nach Anspruch 10
    **dadurch gekennzeichnet,** daß
    der Begrenzer (16) ein dünnes Bändchen aus Kunststoff ist.

12. Laufrolle nach Anspruch 1
    **dadurch gekennzeichnet,** daß
    der Feststeller (5) endseitig Verzahnungen (5a) aufweist.

EP 0 499 082 A1

Fig. 1

Fig. 2

Fig. 4

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X<br>A | DE-U-9 001 251 (PAUL VOM STEIN)<br>* Seite 7, Zeile 3 - Seite 9, Zeile 9;<br>Abbildungen 1-9 *<br>--- | 1,2,3,12<br>7,8,10 | B60B33/02 |
| X<br>A | DE-A-3 429 834 (GROSS & FROELICH)<br>* Seite 15, Zeile 14 - Seite 16, Zeile 16;<br>Abbildung 4 *<br>--- | 1,2,3<br>7,8 | |
| X<br>A | DE-A-2 737 650 (HUFA-ROLLEN)<br>* Seite 7, Zeile 11 - Seite 9, Zeile 2;<br>Abbildungen 1-4 *<br>--- | 1,2,3<br>4,9 | |
| X | GB-A-2 172 499 (ALBERT SCHULTE SÖHNE)<br>* Seite 3, Zeile 77 - Zeile 103; Abbildungen 4,6<br>*<br>--- | 1,2 | |
| X | EP-A-0 372 855 (SHEPHERD PRODUCTS)<br>* Spalte 2, Zeile 6 - Zeile 40; Abbildungen 2,3<br>*<br>----- | 1,2 | |

| RECHERCHIERTE SACHGEBIETE (Int. Cl.5) |
|---|
| B60B |

Der vorliegende Recherchenbericht wurde für alle Patentansprüche erstellt

| Recherchenort | Abschlußdatum der Recherche | Prüfer |
|---|---|---|
| DEN HAAG | 08 MAI 1992 | AYITER I. |